# EUROPEAN PATENT APPLICATION

(11) **EP 2 623 407 A1**
(43) Date of publication of application: **07.08.2013**
(21) Application number: 13154026.2
(22) Date of filing: 05.02.2013
(51) Int. Cl.: B62K 5/00, B62K 5/02, B62K 15/00

(54) **Folding vehicle**

(30) Priority: 06.02.2012 IT CT20120002
(71) Applicant: DI Blasi Industriale S.r.l., 95049 Vizzini (IT)
(72) Inventor: Di Blasi, Carmelo, 96015 Francofonte (IT); Di Blasi, Carlo Maria, 96015 Francofonte (IT)
(74) Representative: Pavan, Andrea

(57) **Abstract**

A three- or four-wheeled folding vehicle (1) comprising a central frame (11), a seat (12), two arms (13) bearing two rear wheels (80), a footrest (14) bearing a front fork (15) which in turn bears a front wheel (81) and a handlebar (16), and connnecting rods (22-28). The seat (12), the arms (13) and the footrest (14) are hinged on the central frame (11) in such a way as to be able to be unfolded into a running configuration and folded into a configuration of minimum overall dimensions. The handlebar (16) is hinged on the front fork (15) so that it can be unfolded into a running configuration or brought close to the fork (15) into a configuration of minimum overall dimensions. The configuration variations of the folding vehicle (1) are produced by means of a single geared electric motor (82) powered by a battery (83).

## Description

### Field of the invention

The present invention relates to a three- or four-wheeled folding vehicle activated by an electric motor that is powered by at least one battery.

A vehicle designed according to the present invention may be folded automatically and reduced to dimensions such that it is easily transportable on other means of transportation (a car, camper van, etc), and can also be used in many areas which are closed to traffic. Such a vehicle increases the mobility and independence of elderly persons and people with minor ambulatory difficulties who are accustomed to using a tricycle for getting from one place to another.

### Prior art

Three- or four-wheeled electric scooters which are intended for people with minor ambulatory problems already exist. Some electric scooters may be disassembled so that they are reduced in size and can be transported on other means, but disassembly and assembly, although straightforward, are operations which not everyone knows how to or is willing to perform.

The only automatically folding vehicle with electric traction is the tricycle mentioned in Italian patent application No. CT2010A000015, which was filed on 1st October 2010 in the name of DI BLASI INDUSTRIALE s.r.l.

However, this tricycle has the drawback that the automatic folding is carried out by means of two geared motors, entailing a degree of complexity of the electrical circuitry and high production costs. The present invention introduces at least one important improvement to this tricycle: the automatic folding is performed with a single geared motor, making the folding mechanism more cost-effective and reliable.

### List of figures

For a better understanding of the present invention, a preferred embodiment of a vehicle will now be described with reference to the attached drawings, wherein:
- Fig. 1 is an overall view of a vehicle according to the present invention, which is shown in its fully opened configuration, that is, in its "running configuration";
- Fig. 1a is a detail of a side view of the tricycle in the running configuration;
- Fig. 1b is a detail of a side view of the tricycle in the running configuration, viewed from the opposite side from Fig. 1a;
- Fig. 1c shows in detail the connection between two elements (15, 16) of the vehicle of Fig. 1;
- Fig. 1d shows a detail of the vehicle of Fig. 1, in the running configuration;
- Fig. 2 shows the vehicle of Fig. 1 in an intermediate, half-folded configuration;
- Fig. 2a shows in detail the connection between two elements (15, 16) of the vehicle of Fig. 1 in an intermediate, half-folded configuration;
- Fig. 3 shows the tricycle of Figs. 1, 1a-d , 2, 2a in the fully folded configuration;
- Fig. 3a shows a detail of the tricycle in the fully folded configuration, viewed from the same side as in Fig. 1a.

### Detailed description of the invention

In order to make the structure and features of the vehicle easier to understand, an embodiment of the tricycle will now be described by way of a non-limiting example.

First of all, unless stated otherwise, the description of the frame elements herein described which do not lie on the plane of symmetry of the tricycle are to be understood as referring to a pair of the said elements arranged symmetrically relative to the longitudinal plane of symmetry of the vehicle. Furthermore, for the purpose of improving the legibility of the drawings, the attached figures include no elements which are not essential to comprehension of the present invention.

In the attached figures, the reference numeral 1 is used to indicate the folding tricycle as a whole.

The latter essentially comprises:
- a central frame 11;
- a seat 12 the front end of which is hinged within the upper part of the frame 11;
- two arms 13 hinged within the lower rear part of the central frame 11 and which bear the rear wheels 80;
- a footrest 14 the rear face of which is hinged within the lower front part of the frame 11;
- an anterior fork 15, which rotates about the steering tube formed on the anterior part of the footrest 14 and which bears the front wheel 81 and the electric traction motor 85;
- a handlebar 16 hinged within the lower part of the front fork 15;
- the whole connected by means of the intermediate and control elements described in what follows.

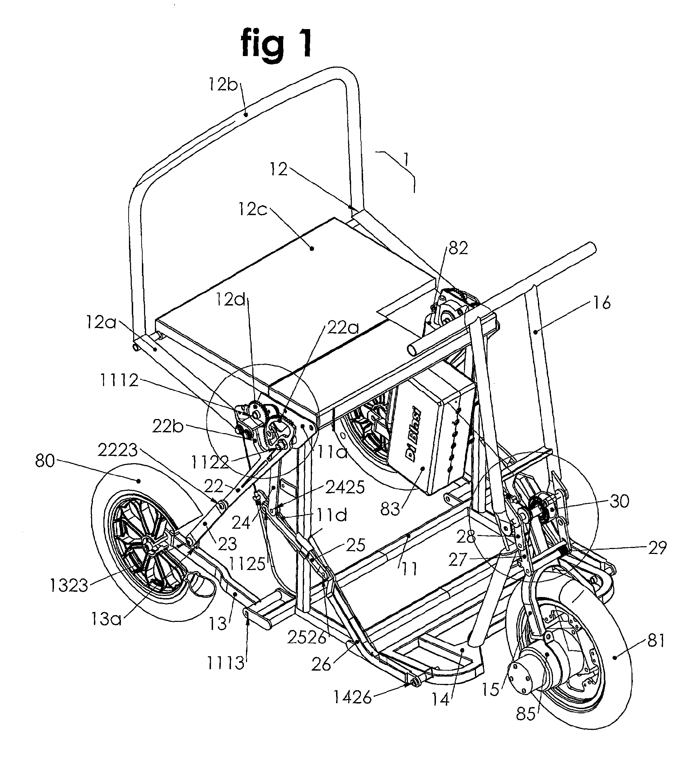

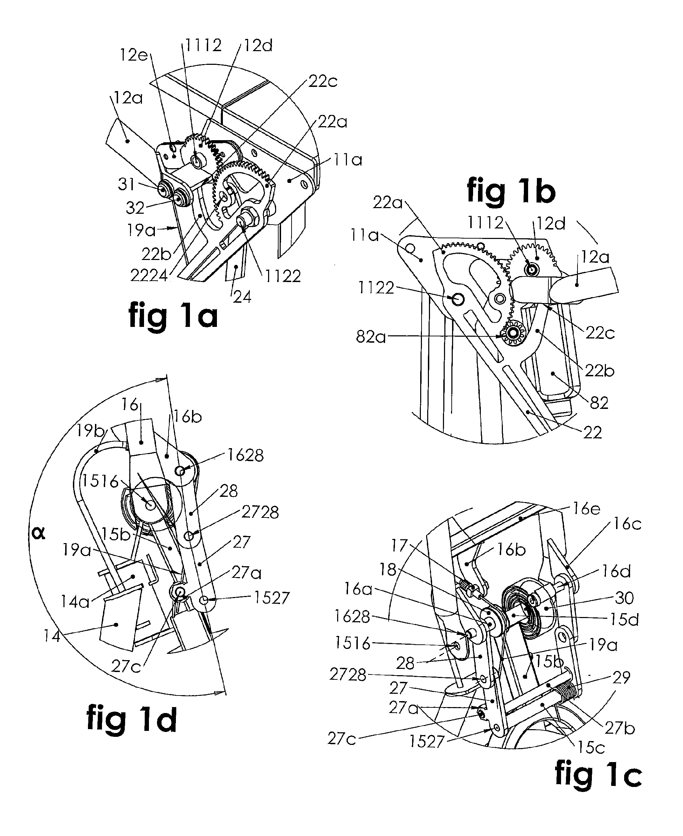

The seat 12 comprises a frame 12a, a back 12b and a piece of material 12c (Fig. 1).

The central frame 11 is a substantially tubular structure the shape of which very approximately resembles a parallelepiped. On the upper part of each of the two sides, the said frame bears a plate 11a, on which is hinged, at 1112, the front end of the frame 12a of the seat 12 (Figs. 1, 1a and 1b).

A toothed wheel 12d coaxial with the hinge 1112 is solid with each front end 12a of the seat 12 (Fig. 1a and 1b).

Engaging with the toothed wheel 12d there is a toothed sector that is solid with a first connecting rod 22 which, in its upper part, is hinged at 1122 to the lug 11a of the frame 11 (Figs. 1a and 1b), while in its lower part it is hinged at 2223 to the upper end of a second connecting rod 23 (Fig. 1), the toothed sector 22a being coaxial with the hinge 1122 (Figs.1a and 1b).

On one side of the frame 11, the toothed sector 22a also engages with a toothed wheel 82a of a geared electric motor 82 attached to the central frame 11 by means of the lug 11a (Fig.1b).

The geared motor 82 is powered by a battery 83 supported by a plate solid with the frame 11 (Fig. 1)

The second connecting rod 23 is hinged, in its lower region, to a lug 13a of the respective arm 13. This arm 13 is hinged, at its front end, at 1113 to the lower rear part of the frame 11, while at its rear end it bears the rear wheel 80 (Fig. 1).

The end 22c of a lug 22b of the first connecting rod 22 constitutes the element on which the frame 12a of the seat 12 rests in its open, i.e. its running configuration (Fig. 1b), thus locking the tricycle in its open, i.e. its running configuration.

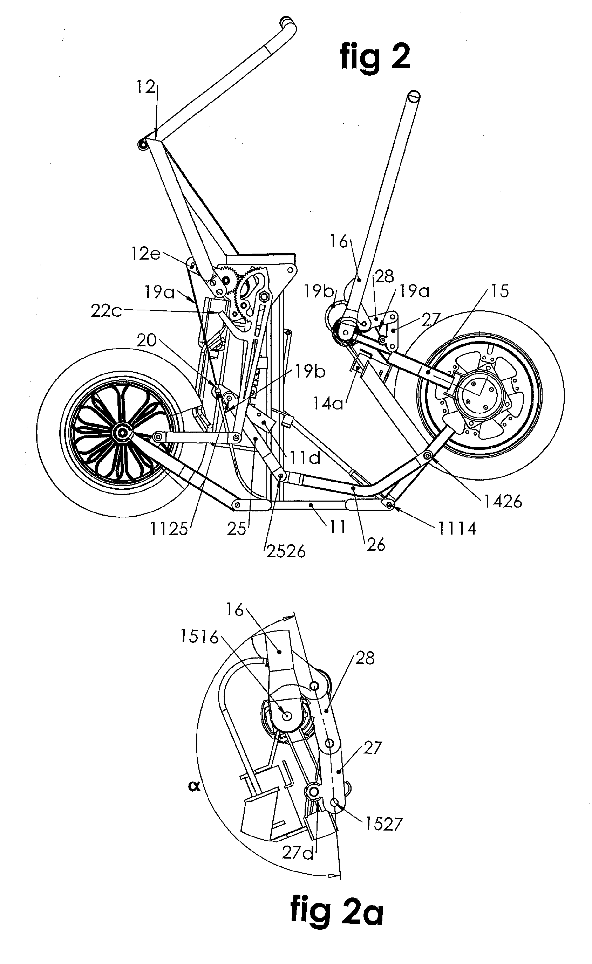

At point 2224 of the toothed sector 22a, the upper part of a third connecting rod 24 is hinged, the lower part of which is hinged at 2425 to a fourth connecting rod 25 (Figs. 1 and 1a). For its part, the fourth connecting rod 25 is hinged at one of its ends 1125 to a lug 11d of the central frame 11 and at its other end 2526 to one end of the fifth, curved connecting rod 26, the second end of which is hinged at 1426 to the footrest 14 (Figs. 1 and 2).

The footrest 14, for its part, is hinged at 1114 within the lower front part of the frame 11 (Fig. 2).

The footrest 14 comprises, within its anterior region, a steering tube 14a (Fig. 2), the axis of which is inclined relative to the vertical by approximately 20° in accordance with the conventional methods of cycle manufacture (Fig. 1d). Within the interior of the steering tube 14a and about its longitudinal axis there rotates a journal solid with the front fork 15 (Figs. 1 and 2).

Said fork 15 bears the front wheel 81 and, accommodated within the wheel, the electric traction motor 85 which transmits the motion, directly or by means of a belt drive or gear reduction unit, to the wheel 81 (Fig. 1). The motor 85 is also powered by the aforementioned battery 83. Control of the motor and therefore of the speed of the tricycle is effected by means of devices which are common to all electric vehicles.

The fork 15 further comprises, in its upper region 15d, a lower transverse lug 15c and an upper transverse lug 15d (Fig. 1c).

To each of the two ends of the upper transverse lug 15d are hinged at 1516 each of the two lower ends of the handlebar 16, which thus governs the steering of the fork 15 about the axis of the steering tube 14a (Fig. 1d and 2a).

To each of the two ends 1527 of the lower transverse lug 15c is hinged one end of a sixth lower connecting rod 27, the second end of which is hinged at 2728 to the lower end of a seventh upper connecting rod 28 (Figs. 1, 1c, 1d, 2a).

Each upper connecting rod 28, for its part, is hinged at its respective upper end, by means of a respective hinge 1628, to a lug 16c formed at the lower end of the handlebar 16. Therefore, the handlebar 16 is connected to the fork 15 both via the hinge 1516 and via the kinematic mechanism constituted by the two connecting rods, lower and upper 27, 28. The two sets of four elements 16, 15, 27 and 28 therefore constitute, respectively, the four sides of two articulated quadrilaterals (Fig. 1, 1c, 1d, 2a) that are symmetrical with respect to the plane of symmetry of the vehicle.

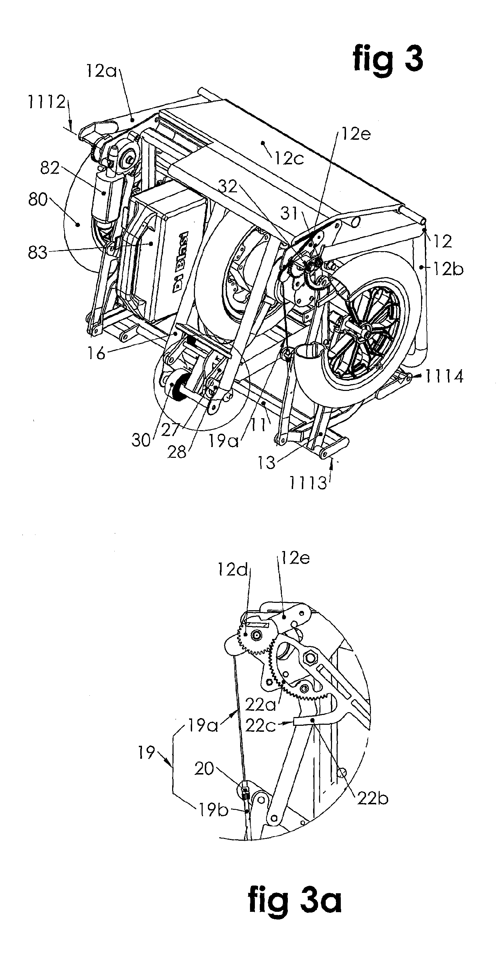

Mounted on the journal 16a of one of the two hinges 1628 is a pulley 18 about which the cable 19a (Fig. 1c) of a flexible transmission 19 (fig 3a) is supported. The cable 19a is constrained at one end to the lug 12e of the back 12 (Figs. 1a and 2), while the other end is constrained at 27c to a lug 27a of the lower connecting rod 27 by means of a common terminal screw (not shown in the drawing) (Figs. 1c and 1d).

A first spiral spring 30 is mounted coaxially with the upper transverse lug 15d of the fork 15, one end of which spring is constrained to the said lug 15d and the other end is constrained to the journal 16d of the other hinge 1628 (Fig. 1c). The spiral of the spring 30 is such that the spring tends to cause the handlebar to rotate towards its open, i.e. its running configuration.

One lug 16b is solid with a transverse element 16e which connects the two vertical elements of the handlebar 16 (Fig. 1c). A common device 17 for arresting one of the ends of the sheath 19b of the flexible transmission 19 is hinged on this lug 16b. A similar device 20 for arresting the other end of the sheath 19b is mounted on the end of the lug 11d of the frame 11 (Fig. 2).

The two lower connecting rods 27 rigidly connected to one another by the element 27b (Fig. 1c). At least one second spring 29 is mounted coaxially with the lower transverse lug 15c of the fork 15, one end of which spring is constrained to the said fork 15 and the other end is constrained to the element 27b. The spiral of the spring 29 is such that the spring tends to cause each lower connecting rod 27 to rotate about the respective hinge 1527 in a direction such as to bring the hinge 2728 between the lower and upper connecting rods 27, 28 close to part 15b of the fork 15 (Fig. 1d).

When the element 27b rests on part 15b of the anterior fork 15 (Fig. 1c), the aforementioned articulated quadrilateral 16, 15, 27 and 28 is locked in the configuration in which the handlebar 16 is in an extended configuration, i.e. in the running (Fig. 1). In this configuration, the lower and upper connecting rods 27, 28 form with each other an angle α greater than 180° (Fig. 1d). This position is held stable by the second spring 29 (Fig. 1c), as a result of which it is not possible to fold the handlebar simply by pushing it forwards; rather it is first of all necessary to give the angle α of the two lower and upper connecting rods 27, 28 a value of less than 180° (Fig. 2a), which happens only by tensioning of the cable 19a (Fig. 1c) actuated by folding of the seat 12.

When one wishes to bring the tricycle 1 from the open configuration, i.e. from the running configuration shown in Fig. 1, to the folded configuration of minimum overall dimensions shown in Fig. 3, it is sufficient to activate only the geared motor 82.

Actuation of the geared motor 82 comprises rotation of the toothed sector 22a engaged with the pinion 82a of the geared motor 82 (Fig. 1b). Rotation of the toothed sector 22a comprises rotation of the pinion 12d engaged therewith and thus of the seat 12 solid with said pinion 12d about the hinge 1112 (Fig. 1b) with a direction of rotation such as two bring the seat from the open position, i.e. the position of use, to the position of minimum overall dimensions (Fig. 3).

Such a rotation of the seat 12 comprises only rotation of the lug 12e and thus displacement of the end of the cable 19a constrained to the end of the lug 12e relative to the device 20 for arresting the sheath 19b, which device is constrained to the end of the lug 11d of the frame 11 (Figs. 2 and 3a). Displacement of the cable 19a relative to the sheath 19b thus comprises tensioning of the cable 19a on the lower connecting rod 27 by inducing the rotation thereof about the hinge 1527 (Fig. 1d). This rotation induces the knee travel first described, which impedes undesirable folding of the handlebar 16. More precisely, rotation of the lower connecting rod 27 about the hinge 1527 involves the angle α passing from a value slightly greater than 180° (which impedes undesirable folding of the handlebar- Fig. 1d)) to a value less than 180° which allows folding of the handlebar (Fig. 2a). Once the lower and upper connecting rods 27, 28 have assumed an angle α less than 180°, by continuing the rotation of the back, the cable 19 constrains the handlebar 16 to rotate about the hinge 1516 by overcoming the opposition of the first spring 30 to the extent that the said handlebar 16 is brought close to the front fork 15 in the configuration of minimum overall dimensions (Figs. 2 and 3).

Simultaneously with folding of the seat 12 and of the handlebar 16, the two rear arms 13 with the wheels borne thereon, and the footrest 14 are automatically folded within the overall dimensions of the central frame 11.

Indeed, rotation of the toothed state sector 22a, following actuation of the geared motor 82, apart from the already described rotation of the seat 12, involves only rotation of the first connecting rod 22 about the hinge 1122 (Figs. 1a and 1b) and therefore displacement of the second connecting rod 23 and then rotation of the two arms 13 about the hinges 1113, in such a way that said two arms 13 with the respective wheels 80 borne thereon are almost entirely contained within the overall dimensions of the central frame 11 with consequent reduction in the overall dimensions of the tricycle (Figs. 2 and 3).

The aforementioned rotation of the first connecting rod 22 about the hinge 1122, in consequence of actuation of the geared electric motor 82, also involves variation of the relative positions of the third, fourth and fifth connecting rods 24, 25 and 26 by virtue of the kinematics described above, and consequently also comprises rotation of the footrest 14 about the hinge 1114, in such a way that the said footrest is contained within the overall dimensions of the central frame 11 with consequent further reduction of the overall dimensions of the tricycle 1 (Figs 2 and 3).

Actuation of the geared electric motor 82 is governed by the user by means of a first button 31 positioned on one of the two sides of the frame 12a of the seat 12, almost level with the centre of rotation of the hinge 1112 in such a way as to have minimum displacement of the position of the button during the phase of folding and unfolding. Said first button 31 acts directly on the motor by means of a relay (not shown) which closes the electrical power circuit (not shown) of the geared electric motor 82. The first button 31 is released once a vehicle has reached the position of minimum overall dimensions shown in Fig. 3. It is possible, although not necessary, to install automatic limiting devices to protect the motor 82. When the button is released during the closure manoeuvre, the folding mechanism is instantaneously stopped in the position it is in at that moment, rendering the folding manoeuvre intrinsically safe.

The procedure of opening the tricycle from the configuration of minimum overall dimensions (Fig. 3) to the configuration of use (Fig. 1) takes place by actuating the geared electric motor 82 in the direction of inverse rotation.

Indeed, by actuating the geared electric motor 82 in this way, the group consisting of the seat 12, the two arms 13 of the rear wheels 80 and the footrest 14 (Fig. 1) are simultaneously unfolded until the running configuration is achieved. Rotation of the seat 12 and of the lug 12e involves the simultaneous cessation of the traction force on the cable 19a. Thus, by ceasing this traction which tends to close the handlebar 16 and keep it folded with respect to the fork 15, the first opposing spring 30 returns the handlebar 16 into a position by which the three hinges 1628, 2728 and 1527 are aligned. From the latter position, the second hinge 29 constrains the lower and upper connecting rods 27, 28 to assume an angle greater than 180° (Fig. 1d). The running configuration is reached when the element 27b connecting each lower connecting rod 27 comes to rest on the part 15b of fork 15 (Fig. 1c) and the end 22c of the lug 22b of the first connecting road 22 butts against the frame 12a of the seat 12 (Fig. 1a), thus locking the tricycle in the running configuration.

For actuation of the unfolding phase, a second button 32 is also provided, positioned alongside the first button 31 almost level with the centre of rotation of the hinge 1112 equally to the first button 31. Unfolding devices and procedure are similar to those described above for folding.

Moreover, it is alternatively possible to give the command for opening and closure of the vehicle with common remote wireless control devices as well as with buttons mounted on the vehicle.

## Claims

1. A three- or four-wheeled folding vehicle (1) comprising:
- a central frame (11);
- rear support means (13) for at least two rear wheels (80);
- a footrest (14) hinged to the lower front face of said central frame (11); said rear support means (13) and said footrest (14) being rotatable about respective hinges which constrain them to the central frame (11) between a first, folded configuration of minimum overall dimensions, in which the rear support means (13) and the footrest (14) are folded on the central frame (11), and a second, open running configuration in which said rear support means (13) and said footrest (14) protrude from said central frame (11);
- front support means (15) for at least one front wheel (81), said front support means (15) being able to rotate about a substantially vertical axis arranged on the front portion of said footrest (14); said rotation being controlled by means of a handlebar (16) the lower end of which is constrained to the upper part of said front support means (15) by means of a hinge (1516) of substantially horizontal axis in such a way that said handlebar (16) is rotatable between a first, closed configuration in which the handlebar (16) remains close to the front support means (15) in a configuration of minimum overall dimensions and a second, open configuration in which said handlebar (16) is unfolded into an upright position of use;
- seating means (12) hinged to the central frame (11); said seating means (12) being rotatable about respective hinges between a first, closed configuration of minimum overall dimensions, in which said seating means (12) are folded on the central frame (11), and a second, open configuration of use, in which said seating means (12) extend behind said central frame (11);
- means adapted to lock the seating means (12), the rear support means (13), the footrest (14) and the handlebar (16) in the second, open configuration of use; and
- a plurality of connecting rods (22, 23, 24, 25, 26, 27, 28) adapted to produce the aforesaid variations in configuration from the first, closed configuration of minimum overall dimensions to the second, open configuration of use, and vice versa;
said folding vehicle (1) being **characterised in that** it further comprises:
- a geared electric motor (82) powered by a battery (83) that is mounted on said folding vehicle (1) for the folding and unfolding of said seating means (12), said rear support means (13), said footrest (14) and said handlebar (16) relative to said support means (15),
- electrical devices for controlling said geared electric motor (82),
- actuation means controllable by a user to activate said geared electric motor (82) in such a way as to induce the setting in motion of all of said plurality of connecting rods (22, 23, 24, 25, 26, 27, 28).

2. A folding vehicle (1) according to claim 1, **characterised in that** it further comprises a flexible transmission (19) including a cable (19a) connected to a lug (12e) solid with the seating means (12) in such a way that said cable is subjectable to tensioning by means of the rotation of said lug (12e), the folding of said handlebar (16) into said first, closed configuration being obtainable by tensioning said cable (19a).

3. A folding vehicle (1) according to any one of the preceding claims, **characterised in that** it further comprises at least one first spring (30) actuable for folding of said handlebar (16) into said second, open configuration.

4. A folding vehicle (1) according to any one of the preceding claims, **characterised in that** said handle (16), said front support means (15), and a pair of connecting rods, respectively the lower and the upper (27, 28) of said plurality of connecting rods (22, 23, 24, 25, 26, 27, 28) form the sides of an articulated quadrilateral that are arranged in such a way within said second, open configuration that an element (27b) of said lower connecting rod (27) rests against a portion (15b) of said front support means (15) to lock said folding vehicle (1) in the second, open configuration, the lower and upper connecting rods (27, 28) being mutually misaligned when positioned in said second, open configuration.

5. A folding vehicle (1) according to any one of the preceding claims, **characterised in that** said cable (19a) of said flexible transmission (19) is active on the lower connecting rod (27) in opposition to a second spring (29) to unlock the handlebar (16) so as to allow the rotation of said handlebar (16) relative to said front support means (15) about a respective hinge (1516).

6. A folding vehicle (1) according to any one of the preceding claims, **characterised in that** it further comprises a first and a second gear (82a, 22a) coupled together to transmit the motion from the geared electric motor ( 82) to said plurality of connecting rods (22, 23, 24, 25, 26, 27, 28), said first gear (82a) being solid with the geared electric motor (82) and said second gear (22a) being solid with a first connecting rod (22) of said plurality of connecting rods (22, 23, 24, 25, 26, 27, 28).

7. A folding vehicle (1) according to any one of the preceding claims, **characterised in that** it comprises two buttons for activating the operation of the geared electric motor (82), said buttons being positioned on one of the two sides of the seating means (12).

8. A folding vehicle (1) according to the preceding claim, **characterised in that** each of said buttons (31, 32) activates the geared electric motor (82) while being pressed down, said geared electric motor (82) being stopped upon release of each of said buttons (31, 32).
